# EUROPÄISCHE PATENTSCHRIFT

(11) **EP 3 288 710 B1**
(45) Veröffentlichungstag und Bekanntmachung des Hinweises auf die Patenterteilung: **03.03.2021**
(21) Anmeldenummer: 16750598.1
(22) Anmeldetag: 28.04.2016
(51) Int. Cl.: B23Q 11/10, B23B 31/12

(54) **SPANNVORRICHTUNG, VERFAHREN FÜR EINE SPANNVORRICHTUNG UND VERWENDUNG FÜR EINE SPANNVORRICHTUNG**
CLAMPING DEVICE, METHOD FOR A CLAMPING DEVICE AND USE FOR A CLAMPING DEVICE
DISPOSITIF DE SERRAGE, PROCÉDÉ POUR DISPOSITIF DE SERRAGE ET UTILISATION D'UN DISPOSITIF DE SERRAGE

(30) Priorität: 29.04.2015 DE 102015207875
(43) Veröffentlichungstag der Anmeldung: 07.03.2018
(73) Patentinhaber: Gühring KG, 72458 Albstadt (DE)
(72) Erfinder: FIEDLER, Mario, 13125 Berlin (DE); SCHÖNIGER, Jan, 14612 Falkensee (DE)
(74) Vertreter: Winter, Brandl, Fürniss, Hübner, Röss, Kaiser, Polte - Partnerschaft mbB
(86) Internationale Anmeldenummer: PCT/DE2016/000183
(87) Internationale Veröffentlichungsnummer: WO 2016/173578

(56) Entgegenhaltungen:
- EP-A1- 2 749 367
- WO-A1-91/07245
- DE-A1- 2 038 574
- DE-A1- 10 331 769
- DE-A1-102007 012 859
- DE-U1-202007 000 970

## Beschreibung

### Gebiet der Erfindung

Die vorliegende Erfindung betrifft eine Spannvorrichtung zum Einspannen eines Werkzeugs. Des Weiteren betrifft die Erfindung ein Verfahren zur Präparation, Reinigung und/oder Prüfung eines Werkzeugs mit einer Spannvorrichtung.

### Hintergrund der Erfindung

Aus dem Stand der Technik ist bekannt, Werkzeuge - wie beispielsweise einen Kühlkanäle aufweisenden Bohrer mit einem Schaft - zu präparieren. Hierfür kann zum Beispiel eine Schneidkantenpräparationsanlage vorgesehen sein. In einer derartigen Anlage wird ein Werkzeug oder werden mehrere Werkzeuge eingespannt und bearbeitet.

Des Weiteren ist aus der DE 10 2007 012 859 A1 ein Spannfutter gemäß dem Oberbegriff des Anspruchs 1 bekannt. Das insbesondere für den Einsatz in der Medizin vorgesehene Spannfutter weist ein Gehäuse, das einen Durchgangskanal aufweist und in dem wenigstens ein Spannelement vorgesehen ist, und eine Einrichtung zur Erzeugung einer Spannbewegung des Spannelements, auf. Die Einrichtung weist wenigstens ein Getriebeelement auf, das mit einem Spülkanal versehen ist, der eine gezielte Durchspülung eines inneren Hohlraums im Gehäuse des Spannfutters gestattet.

Die DE 103 31 769 A1 offenbart ein Spannfutter zum Einspannen eines Werkzeugs mit einem Futterkörper, einer Aufnahmebohrung und einem Spannmittel zum Einspannen des Werkzeugs in Form einer mit Hydraulikmittel beaufschlagbaren Ringkammer. Zur Positionierung des Werkzeugs ist im Futterkörper eine axial verstellbare Voreinstellschraube mit Durchgangsbohrung und Innensechskant vorgesehen, an der das Werkzeug anliegt. Zwischen der Voreinstellschraube und einem in einer Arbeitsspindel ausgebildeten Kühlmittelkanal ist ein teleskopartiges Kühlmittelzuführrohr angeordnet, das die Zufuhr von Kühlmittel vom Kühlmittelkanal zum Werkzeug bei unterschiedlich positionierter Voreinstellschraube ermöglicht.

### Zusammenfassung der Erfindung

Es ist ausgehend von der DE 10 2007 012 859 A1 Aufgabe der vorliegenden Erfindung, eine Spannvorrichtung für Werkzeuge zu schaffen, mit der diese, insbesondere bei einer Präparation und/oder einer Reinigung und/oder Prüfung, auf vorrichtungstechnisch einfache Weise präpariert und/oder gereinigt und/oder geprüft werden können, wobei Spannbacken zum Einspannen des Werkzeugs auch in einer Entspannposition eines Betätigungselements, das die Spannbacken betätigen kann, zumindest leicht eingespannt sein können. Des Weiteren ist es Aufgabe der Erfindung, ein Verfahren für eine Spannvorrichtung zu schaffen, mit der ein Werkzeug auf einfache Weise präpariert und/oder geprüft und/oder gereinigt werden kann.

Die Aufgabe hinsichtlich der Spannvorrichtung wird gelöst gemäß den Merkmalen des Anspruchs 1 und hinsichtlich des Verfahrens gemäß den Merkmalen des Anspruchs 7.

Weitere vorteilhafte Ausgestaltungen der Erfindung ergeben sich aus den Unteransprüchen. Diese können in technologisch sinnvoller Weise miteinander kombiniert werden, wodurch sich zum Teil auch vorteilhafte Wirkungen einstellen können, die über die Summe der Einzelwirkungen hinausgehen. Die Beschreibung, insbesondere im Zusammenhang mit den Figuren, charakterisiert und spezifiziert die Erfindung zusätzlich.

Es ist eine Spannvorrichtung für eine Präparationsanlage oder Prüfanlage oder Kühlkanalreinigungsanlage zum Einspannen eines insbesondere etwa zylindrischen Werkzeugs, insbesondere eines einen Schaft aufweisenden Werkzeugs, für eine Präparation und/oder für ein Prüfen und/oder für eine Reinigung des Werkzeugs vorgesehen. Bei dem Werkzeug handelt es sich beispielsweise um einen Bohrer mit einem Kühlkanal oder mit mehreren Kühlkanälen. Die Spannvorrichtung hat ein Gehäuse mit einer Werkzeugaufnahme, in die das Werkzeug abschnittsweise einsetzbar ist, womit ein zu präparierender, zu prüfender oder zu reinigender Abschnitt des Werkzeug aus dem Gehäuse auskragt. Des Weiteren ist in dem Gehäuse ein Spannmittel zum Einspannen des in der Werkzeugaufnahme anordbaren Werkzeugs vorgesehen. Mit Vorteil ist ein Fluidkanal zur Versorgung des Werkzeugs mit einem Fluid oder einem Sperrmedium oder einem Reinigungsmedium vorgesehen.

Diese Lösung hat den Vorteil, dass zum einen mit der Spannvorrichtung das Werkzeug eingespannt werden kann, um es insbesondere zu präparieren oder zu reinigen oder zu prüfen, und dass zum anderen ein Fluid in Kühlkanäle des Werkzeugs einbringbar ist. Durch das Einbringen des Fluids kann das Werkzeug gereinigt oder geprüft werden, um beispielsweise einen Verschluss eines Kühlkanals festzustellen. Des Weiteren kann bei der Präparation des Werkzeugs durch die Zuführung von Fluid dieses als Sperrmittel eingesetzt werden, das ein Eindringen von Fremdkörpern in die Kühlkanäle verhindert.

Vorzugsweise ist die Werkzeugaufnahme derart ausgestaltet, dass Werkzeuge mit unterschiedlichem Durchmesser, insbesondere zwischen größer oder gleich 3mm und kleiner oder gleich 22 mm einsetzbar sind.

Der Fluidkanal ist vorrichtungstechnisch einfach durch ein Rohr gebildet. Das Rohr erstreckt sich vorzugsweise im Gehäuse der Spannvorrichtung. Weiter vorzugsweise ist das Rohr etwa koaxial zum Werkzeug oder zur Werkzeugaufnahme angeordnet, um das Werkzeug auf einfache Weise fluidisch mit dem Rohr zu verbinden. Das Rohr hat eine ringförmige Anlagefläche für das Werkzeug. Das Rohr dient somit als Eintauchbegrenzung und/oder Anschlag für das Werkzeug in den Aufnahmeraum. Des Weiteren kann die ringförmige Anlagefläche den Mündungsbereich des Rohrs umgreifen. Das Werkzeug kann dann auf einfache Weise durch Anlage an die Anlagefläche mit dem Rohr fluidisch verbindet sein. Das Rohr ist beispielsweise über einen Gehäuseanschluss mit dem Fluid versorgbar oder es ist auch denkbar, dass das Rohr aus dem Gehäuse auskragt und direkt an eine Fluidversorgung angeschlossen ist.

Das Rohr ist über einen Flansch mit einem Gehäuseboden des Gehäuses durch eine Schraubverbindung fest verbunden oder axial verschiebbar, wodurch es als Auswerfer für das Werkzeug vorgesehen sein kann, wenn das Spannmittel gelöst ist. In kompakter Ausgestaltung der Spannvorrichtung kann zum Verschieben ein im Gehäuse ausgebildete Verschiebevorrichtung vorgesehen sein, bei der es sich beispielsweise um einen Zylinder handelt. Hierbei kann das Rohr einen Radialbund aufweisen, der als Kolben des Zylinders dient und zwei voneinander wegweisende Druckflächen hat, die jeweils einen Druckraum begrenzen.

Das Spannmittel hat eine Mehrzahl an das Werkzeug, insbesondere an einen Schaft des Werkzeugs, anlegbare Spannbacken. Diese können von einem Betätigungselement mit einer Spannkraft beaufschlagbar sein. Vorzugsweise hat das Betätigungselement eine Keilfläche, über die die Mehrzahl von Spannbacken mit ihrer Keilfläche anlegbar sind, um mit einer Spannkraft beaufschlagt zu werden. Die Mehrzahl von Spannbacken weisen des Weiteren jeweils eine Spannfläche auf, die in Anlage an das Werkzeug bringbar sind.

Das Spannmittel hat eine Mehrzahl von Spannbacken, um das Werkzeug einzuspannen. Diese können einfach über eine Struktur gehalten werden und somit eine Einheit bilden, die kompakt ausgestaltet und einfach handhabbar ist. Vorzugsweise bilden die Spannbacken mit der Struktur etwa einen Konus. Die Spannbacken weisen, wie vorstehend bereits erläutert, auf ihrer Außenseite oder auf ihrer vom Werkzeug wegweisenden Seite jeweils eine Keilfläche auf. Über diese können sie vom, insbesondere schalenförmigen Betätigungselement betätigbar sein. Die das Werkzeug umfassenden Spannbacken können dann bei einer axialen Verschiebung des Betätigungselements radial hin zum Werkzeug oder weg vom Werkzeug verschoben werden, indem sie mit ihren Keilflächen am schalenförmigen Betätigungselement gleiten. Bei der Struktur handelt es sich vorzugsweise um eine Manschette. Die Manschette kann zumindest teilweise oder zumindest im Wesentlichen oder vollständig aus Gummi oder aus Hartgummi oder aus einem Kunststoff bestehen. Beispielsweise sind die Spannbacken in Umfangsrichtung des eingesetzten Werkzeugs gesehen vorzugsweise auf einem Teilkreis angeordnet. Die Spannbacken können zumindest im Wesentlichen vollständig oder vollständig aus Metall, insbesondere aus Stahl, bestehen. Des Weiteren ist vorteilhaft, wenn die Struktur oder die Manschette elastisch ist und in Spannrichtung des Spannmittels gespannt wird sowie in Entspannrichtung des Spannmittels entspannt wird. Die Einheit aus Spannbacken und Struktur hat beispielsweise eine etwa kegelstumpfförmige oder kegelförmige Außenmantelfläche. Das Betätigungselement hat vorzugsweise eine zumindest abschnittsweise kegelförmige oder etwa kegelstumpfförmige Mantelfläche zum Betätigen der Spannbacken. Die Spannbacken können hierbei mit ihrer Keilfläche an der Mantelfläche anliegen. Die Mantelfläche kann sich hierbei in einer Richtung weg von der Werkzeugaufnahme oder den Spannbacken verjüngen. Entsprechend verjüngen sich die Spannbacken in einer Richtung hin zur Mantelfläche des Betätigungselements und können in dieses eintauchen. Die Kombination aus etwa konusförmig angeordneten Spannbacken und schalenförmigem Betätigungselement führt somit zu einer kompakten und vorrichtungstechnisch einfach ausgestalteten Spannvorrichtung. Eine Längsachse der kegelstumpfförmigen oder kegelförmigen Mantelfläche erstreckt sich vorzugsweise etwa koaxial zur Längsachse des Werkzeugs. Das Betätigungselement kann den Fluidkanal vollständig umfassen. Des Weiteren ist denkbar, dass das Betätigungselement in Axialrichtung vom Fluidkanal und/oder vom Gehäuse geführt ist.

Bei dem Betätigungselement kann es sich einfach um einen fluidisch betätigbaren Kolben handeln, der in dem Gehäuse angeordnet ist, und über den das Spannmittel betätigbar ist. Zum Betätigen ist der Kolben vorzugsweise mit Luft beaufschlagbar, bei der es sich um ein einfach handhabbares Fluid handelt.

In weiterer Ausgestaltung der Erfindung kann der Kolben zusammen mit dem Gehäuse einen ersten und zweiten Druckraum begrenzen. Über den ersten Druckraum kann er mit Druckmittel in Richtung von Entspannposition oder in Richtung einer Entspannposition des Spannmittels beaufschlagbar sein. Des Weiteren kann er über den zweiten Druckraum mit Druckmittel in Richtung von Spannpositionen oder einer Spannposition des Spannmittels beaufschlagt sein. Vorzugsweise ist der Kolben gestuft mit einem ersten Kolbenabschnitt und einem zweiten einen kleineren Durchmesser aufweisenden Kolbenabschnitt ausgebildet, um auf vorrichtungstechnisch einfache Weise die Druckräume in dem Gehäuse zu begrenzen. Zur Aufnahme und/oder Führung des gestuften Kolbens kann das Gehäuse einen ersten Gehäuseabschnitt und einen zweiten einen kleineren Innendurchmesser aufweisenden Gehäuseabschnitt haben. Der zweite Kolbenabschnitt ist im Vergleich zum ersten Kolbenabschnitt vorzugsweise näher an der Werkzeugaufnahme angeordnet. Der erste einen größeren Durchmesser aufweisende Kolbenabschnitt kann zur Druckmittelbeaufschlagung des Kolbens eingesetzt werden, um diesen zu bewegen. Hierbei kann dann eine etwa zur Werkzeugaufnahme weisende, insbesondere ringförmige, Druckfläche des ersten Kolbenabschnitts den ersten Druckraum begrenzen. Eine von der Werkzeugaufnahme wegweisende, insbesondere ringförmige, Druckfläche des ersten Kolbenabschnitts kann dann zusammen mit dem Gehäuse den zweiten Druckraum begrenzen. Die Druckfläche, die den ersten Druckraum begrenzt kann kleiner als die den zweiten Druckraum begrenzende Druckfläche sein, womit beispielsweise bei einem gleichen Druck der Druckräume die in Spannrichtung aus dem Druck resultierende Kraft größer als in Entspannrichtung ist. Um ein Entweichen von Fluid zu vermeiden, sind Dichtmittel vorzugsweise zwischen einem jeweiligen Kolbenabschnitt und dem Gehäuse vorgesehen.

Die Spannbacken sind mit ihrer von dem Betätigungselement wegweisenden Stirnfläche an einer Druckplatte axial abstützbar. Die Druckplatte ist axial, insbesondere in Richtung der Längsachse des Werkzeugs, verschiebbar und stützt sich auf seiner von der Spannbacke wegweisenden Plattenseite an einem elastischen Stützelement ab. Dies hat den Vorteil, dass die Spannbacken auch in Entspannpositionen des Betätigungselements zwischen diesem und dem Stützelement mit einer Spannkraft zumindest leicht eingespannt sein können. Des Weiteren ist durch die axiale Verschiebung der Druckplatte eine verbesserte Führung der Spannbacken in eine Richtung hin und in eine Richtung weg vom Werkzeug ermöglicht. Das Stützelement stützt sich vorzugsweise am Gehäuse ab. Die Druckplatte ist vorzugsweise ringförmig ausgestaltet und hat eine Durchgangsaussparung zur Durchführung des Werkzeugs, wobei diese derart gewählt ist, dass Werkzeuge mit unterschiedlichem Durchmesser durch die Druckplatte führbar sind. Es ist des Weiteren denkbar, dass die Druckplatte axial vom Gehäuse geführt wird. Es ist weiter denkbar, dass das elastische Stützelement ohne die Druckplatte vorgesehen ist und sich die Spannbacken somit direkt an dem Stützelement abstützen können.

Das Stützelement weist vorzugsweise eine Durchgangsaussparung zur Durchführung des Werkzeugs auf. Beispielsweise besteht das Stützelement aus Silikon, insbesondere aus einem 2-Komponenten-Silikon. Vorzugsweise wird ein Durchmesser der Durchgangsaussparung des Stützelements bei einer Verschiebung des Betätigungselements in Richtung von Spannpositionen durch Kraftbeaufschlagung über die Spannbacken verkleinert und in entgegengesetzter Richtung vergrößert. Hierdurch kann das Stützelement einen Spalt zwischen dem Stützelement und dem Werkzeug verringern oder schließen, um ein Eindringen von Fremdkörpern in das Gehäuse zu vermeiden und/oder um das Gehäuse abzudichten. Vorzugsweise liegt eine Innenwandung der Durchgangsaussparung des Stützelements im eingespannten Zustand des Werkzeugs an diesem, insbesondere dichtend, an. Um eine Dichtwirkung des Stützelements im eingespannten Zustand zu verbessern, kann in der Durchgangsaussparung zumindest eine, insbesondere ringförmige, Dichtlippe ausgebildet sein, die dann am Werkzeug anlegbar ist. Das Stützelement ist vorzugsweise ringförmig ausgestaltet und kann mit seiner Außenmantelfläche an einer Innenmantelfläche des Gehäuses dichtend oder zumindest in Spannpositionen des Kolbens dichtend anliegen. Mit seiner von den Spannbacken wegweisenden Stirnfläche kann das Stützelement ebenfalls insbesondere dichtend am Gehäuse anliegen und sich axial an diesem abstützen.

Das Gehäuse kann vorrichtungstechnisch einfach einen, insbesondere gestuften Mantelabschnitt aufweisen, der von einem ersten Gehäusedeckel werkzeugaufnahmeseitig bedeckt ist. Der erste Gehäusedeckel kann eine Durchgangsaussparung zur Durchführung des Werkzeugs aufweisen. Beispielsweise ist der erste Gehäusedeckel büchsenförmig ausgestaltet und auf den Mantelabschnitt geschraubt. Des Weiteren kann das Gehäuse von einem zweiten Gehäusedeckel auf seiner von der Werkzeugsaufnahme wegweisenden Seite abgeschlossen sein. Ist das Betätigungselement als Kolben ausgebildet, so kann dieser zusammen mit dem zweiten Gehäusedeckel den zweiten Druckraum begrenzen. In dem zweiten Gehäusedeckel kann dann weiter ein Fluidanschluss für den zweiten Druckraum ausgebildet sein. In dem Mantelabschnitt wiederum kann ein Fluidanschluss für den ersten Druckraum vorgesehen sein.

In weiterer Ausgestaltung der Erfindung erstreckt sich das Rohr von einem Gehäuseboden des Gehäuses aus nach innen. Der Gehäuseboden ist dabei vorzugsweise durch den zweiten Gehäusedeckel gebildet. Das Rohr kann dann gehäusebodenseitig über einen Flansch vorrichtungstechnisch einfach am Gehäuse festgelegt sein. Über einen Fluidanschluss des Gehäusebodens kann der Fluidkanal mit Druckmittel versorgbar sein oder es ist ein Fluidanschluss am Rohr ausgebildet. Alternativ können im Gehäuseboden des Gehäuses Druckräume vorgesehen sein, die vom Kolben des Rohrs zum axialen Verschieben des Rohrs begrenzt sind.

Vorzugsweise sind in weiterer Ausgestaltung der Erfindung zwischen einer, insbesondere etwa zylinderförmigen Innenmantelfläche des Betätigungselements und dem Rohr Dichtmittel vorgesehen.

Ist das Betätigungselement als Kolben ausgebildet, so kann seiner zum zweiten Druckraum weisenden Seite eine plattenförmige Abdeckung vorgesehen sein, die als Beaufschlagungsfläche für das Druckmittel oder das Fluid dient. Abdeckung ist vorzugsweise lösbar, insbesondere über eine Schraubverbindung, am Betätigungselement fixiert. Im ersten Kolbenabschnitt kann von außen her eine Aufnahmenut für die Dichtmittel eingebracht sein. Bei den Dichtmitteln handelt es sich beispielsweise um zwei Dichtringe, wobei ein äußerer Dichtring einen inneren Dichtring umgreift. Die Aufnahmenut kann von der Abdeckung axial begrenzt sein.

In die Innenmantelfläche des Betätigungselements kann eine Aufnahmenut für Dichtmittel eingebracht sein. Vorzugsweise ist die Aufnahmenut der Innenmantelfläche durch die Abdeckung axial begrenzt, wodurch Dichtmittel in die Aufnahmenut einfach einsetzbar sind, wenn die Abdeckung nicht am Betätigungselement montiert ist. Des Weiteren kann die Abdeckung einen axial in Richtung hin zu den Spannbacken erstreckenden Axialbund aufweisen, der in die Innenmantelfläche des Betätigungselements einkragt und mit seiner ringförmigen Stirnfläche die Aufnahmenut der Innenmantelfläche begrenzt. Des Weiteren kann in die Innenmantelfläche des Betätigungselements eine Aufnahmenut für einen Gleitring vorgesehen sein.

In weiterer Ausgestaltung der Erfindung ist die Mantelfläche des Betätigungselements an einem Elementeinsatz ausgebildet, der insbesondere lösbar am Betätigungselement festgelegt ist. Das Material vom Elementeinsatz kann somit vorteilhafterweise unabhängig vom übrigen Material des Betätigungselements ausgewählt werden. Vorzugsweise besteht der Elementeinsatz zumindest im Wesentlichen aus Keramik, womit er einen geringen Verschleiß beim Spannen und Entspannen der Spannbacken, eine hohe Druckfestigkeit, eine hohe Robustheit und eine gute Gleitfähigkeit aufweist. Zur Aufnahme des Elementeinsatzes ist vorzugsweise eine Axialaussparung in das Betätigungselement von seiner zum Werkzeug weisenden Seite her eingebracht. In der Axialaussparung kann ein sich in axialer Richtung erstreckender und das Rohr umgreifender Bund ausgebildet sein. Somit kann ein Aufnahmeraum für den Elementeinsatz von einer Außenmantelfläche des Bunds, einer Innenmantelfläche der Axialaussparung und einer Bodenfläche der Axialaussparung begrenzt sein. Hierdurch ist der Elementeinsatz in beide Radialrichtungen festgelegt. Zum axialen Festlegen des Elementeinsatzes ist ein Sicherungsring vorgesehen, der von außen in den Bund eingreift, womit der Elementeinsatz zwischen dem Sicherungsring und der Bodenfläche der Axialaussparung axial festgelegt ist. In weiterer Ausgestaltung der Erfindung kann der Elementeinsatz radial von außen zurückgestuft sein und mit dem zurückgestuften Abschnitt in die Axialaussparung eingesetzt sein. Durch Zurückstufung des Elementeinsatzes kann eine zum übrigen Betätigungselement weisende Ringfläche gebildet sein, wobei zwischen dieser und einer ringförmigen Stirnfläche des Betätigungselements Dichtmittel angeordnet sein können. Vorzugsweise ist hierbei eine axial Länge des zurückgestuften Abschnitts größer als eine Tiefe der Axialaussparung des Betätigungselements. Im zurückgestuften Abschnitt kann des Weiteren eine Radialnut eingebracht sein, die von der Innenmantelfläche der Axialaussparung des Betätigungselements begrenzt ist und die ein Dichtmittel eingesetzt sein kann.

Vorzugsweise ist in dem Rohr - insbesondere in dessen Außenmantelfläche - eine Fluidöffnung eingebracht, um den Fluidkanal mit einem Innenraum des Gehäuses zu verbinden. Hierbei kann die Fluidöffnung in der Spannposition oder in Spannpositionen des Betätigungselements geschlossen sein und in der Entspannposition oder in den Entspannpositionen des Betätigungselements geöffnet sein. Somit kann in der Entspannposition Fluid aus der Fluidöffnung entweichen, um beispielsweise einen Druck abzubauen. Vorzugsweise wird die Fluidöffnung vom Betätigungselement mit dessen Innenmantelfläche auf- und zugesteuert.

Bei einem vorteilhaften Verfahren für eine Spannvorrichtung gemäß einem der vorhergehenden Aspekte können folgende Schritte vorgesehen sein:
- Einsetzen eines Werkzeugs,
- Einspannen des Werkzeugs,
- Prüfen von zumindest einem Kanal oder Kühlkanal oder von Kanälen oder Kühlkanälen im Werkzeug durch Zuführung von Fluid aus dem Fluidkanal in das Werkzeug. Alternativ oder zusätzlich kann ein Reinigen von zumindest einem Kanal oder von Kanälen des Werkzeugs durch Zuführung von Fluid aus dem Fluidkanal in das Werkzeug vorgesehen sein. Alternativ oder zusätzlich kann eine Zuführung von Fluid aus dem Fluidkanal in zumindest einen Kanal oder in Kanäle des Werkzeugs vorgesehen sein, wobei das Fluid als Sperrmedium eingesetzt wird, um ein Eindringen von Fremdkörpern in den oder in die Kanäle bei einer Bearbeitung oder Präparation des Werkzeugs zu vermeiden.

Das Werkzeug kann vor oder nach dem Prüfen und/oder vor oder nach dem Reinigen bearbeitet oder präpariert werden und dabei mit dem Sperrmedium beaufschlagt werden.

Eine Verwendung der Spannvorrichtung gemäß einem der vorhergehenden Aspekte sieht ein Prüfen eines Kanals oder zumindest eines Kanals des Werkzeugs vor und/oder sieht ein Reinigen eines Kanal oder zumindest eines Kanals des Werkzeugs vor und/oder sieht eine Sperrmittelbeaufschlagung eines Kanal oder zumindest eines Kanals des Werkzeugs vor. Vorzugsweise wird die Spannvorrichtung dabei in einer Oberflächenpräparationsanlage für ein Werkzeug verwendet. Alternativ oder zusätzlich kann die Spannvorrichtung in einer Kühlkanalreinigungsanlage für ein Werkzeug eingesetzt sein. Des Weiteren kann alternativ oder zusätzlich die Spannvorrichtung in einer Prüfanlage für das Werkzeug vorgesehen sein. Es ist denkbar, dass die Kühlkanalreinigungsanlage ein Teil der Oberflächenpräparationsanlage ist.

Des Weiteren ist denkbar, dass die Oberflächenpräparationsanlage eine Nassstrahlanlage oder einen Nassstrahlautomat aufweist, bei dem vorteilhafterweise durch die Sperrmittelbeaufschlagung des Werkzeugs ein Eindringen von Fremdkörpern in das Werkzeug vermieden wird.

Mit Vorteil kann eine Anordnung mit einer Mehrzahl von Spannvorrichtungen gemäß einem der vorhergehenden Aspekte vorgesehen sein, womit mehrere Werkzeuge gereinigt, geprüft und/oder mit Sperrmittel beaufschlagbar sind.

### Kurze Beschreibung der Zeichnungen

Weitere Einzelheiten und Vorteile der Erfindung werden anhand der in den Zeichnungen dargestellten Ausführungsbeispiele deutlich. Es zeigen:
Figur 1 in einem Längsschnitt schematisch eine erfindungsgemäße Spannvorrichtung gemäß einem ersten Ausführungsbeispiel im nicht gespannten Zustand,
Figur 2 in einem Längsschnitt schematisch die Spannvorrichtung aus Figur 1 in einem gespannten Zustand,
Figur 3 in einem Längsschnitt schematisch die Spannvorrichtung gemäß einem zweiten Ausführungsbeispiel,
Figur 4 in einem Querschnitt schematisch mit einer Manschette verbundene Spannbacken.

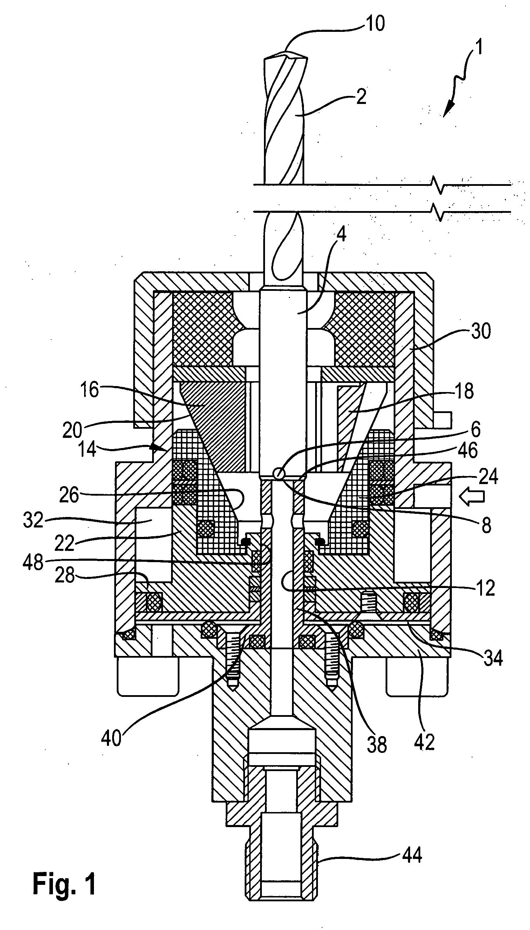

Gemäß Figur 1 ist die Spannvorrichtung 1 dargestellt, mit der ein Werkzeug 2 einpannbar ist. Bei dem Werkzeug 2 handelt es sich um einen Bohrer. Das Werkzeug 2 hat einen etwa kreiszylindrischen Schaft 4 und zumindest einen Kühlkanal 6, dessen Eintrittsöffnung im Bereich einer schaftseitigen Stirnfläche 8 des Werkzeugs 2 ausgebildet ist. Der Kühlkanal 6 durchsetzt dabei das Werkzeug 2 vollständig und mündet etwa in der von der Stirnfläche 8 wegweisenden Stirnfläche 10 des Werkzeugs 2. Mit der Spannvorrichtung 1 ist das Werkzeug zum einen einspannbar und damit axial und radial festlegbar und zum anderen kann zusätzlich über einen Fluidkanal 12 ein Fluid in den zumindest einen Kühlkanal 6 beschickt werden.

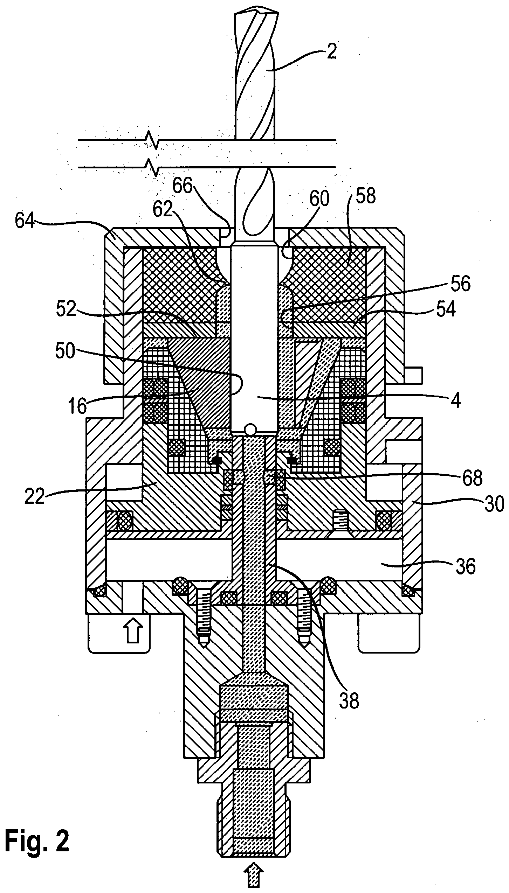

Zum Spannen des Werkzeugs 2 ist in der Spannvorrichtung 1 ein Spannmittel 14 vorgesehen. Dieses hat eine Vielzahl von Spannbacken 16, die umlaufend um das Werkzeug 2 angeordnet sind und über eine Manschette 18 aus Gummi gehaltert werden. Eine jeweilige Spannbacke 16 hat eine Keilfläche 20. Die Keilflächen 20 bilden zusammen dann etwa einen Konus, der sich hin in Richtung zu einem Betätigungselement 22 verjüngt. Dieses hat einen Elementeinsatz 24 aus Keramik, der schalenförmig ausgebildet ist. Der Elementeinsatz 24 weist hierbei eine etwa kegelstumpfförmige Mantelfläche 26 auf. An dieser liegen die Spannbacken 16 mit ihren Keilflächen 20 zum Spannen und Entspannen etwa an. Das Betätigungselement 22 ist als Kolben ausgebildet und weist hierfür einen Radialbund 28 auf. Der Radialbund 28 begrenzt in einem Gehäuse 30, in dem das Betätigungselement 22 axial in Richtung einer Längsachse des Werkzeugs 2 verschiebbar geführt ist, mit seiner zum Werkzeug 2 weisenden Ringfläche einen ersten Druckraum 32. Über diesen ist das Betätigungselement 22 mit einem Druckmittel beaufschlagbar, um es mit einer Druckkraft in einer Richtung weg von den Spannbacken 16 axial zu verschieben. Mit einer Stirnfläche 34, die weg von den Spannbacken 16 weist, begrenzt das Betätigungselement 22 einen zweiten Druckraum 36, siehe Figur 2. Über den Druckraum 36 ist das Betätigungselement 22 mit Druckmittel beaufschlagbar, um dieses axial in Richtung der Spannbacken 16 zu verschieben.

Der Fluidkanal 12 ist in einem Rohr 38 ausgebildet, das sich im Gehäuse 30 axial erstreckt. Das Rohr 38 ist über einen Flansch 40 mit einem Gehäuseboden 42 über eine Schraubverbindung fest verbunden. Der Fluidkanal 12 setzt sich dann im Gehäuseboden 42 axial fort und mündet in einem Fluidanschluss 44. Das Rohr 38 erstreckt sich axial dann etwa bis zu den Spannbacken 16, wobei es in Axialrichtung vorzugsweise leicht von diesen beabstandet ist. Eine zum Werkzeug 2 weisenden ringförmige Stirnfläche 46 des Rohrs 38 dient als Anlagefläche für das Werkzeug 2. Das Betätigungselement 22 hat eine axiale Durchgangsaussparung 48, durch die das Rohr 38 geführt ist.

Gemäß Figur 2 weisen die Spannbacken 16 jeweils eine sich axial erstreckende Anlagefläche 50 oder Spannfläche auf, über die die Spannbacken 16 an das Werkzeug 2 angreifen können. Des Weiteren weist eine jeweilige Spannbacke 16 eine von dem Betätigungselement 22 wegweisenden Stirnfläche 52 auf, über die sich die Spannbacken 16 axial an einer Druckplatte 54 abstützen. Diese ist ringförmig ausgestaltet und hat eine Durchgangsaussparung 56, durch die das Werkzeug 2 durchführbar ist. Die Druckplatte 54 stützt sich wiederum an einem aus Silikon bestehenden Stützelement 58 ab. Dieses ist ebenfalls ringförmig ausgestaltet und hat eine Durchgangsaussparung 60 zur Durchführung des Werkzeugs 2. In der Durchgangsaussparung 60 ist eine Dichtlippe 62 vorgesehen, die im eingespannten Zustand des Werkzeugs 2 an dem Schaft 4 dichtend anliegt. Des Weiteren liegt das Stützelement 58 mit seiner Außenmantelfläche und von der Druckplatte 54 wegweisenden Stirnfläche dichtend am Gehäuse 30 an.

Das Gehäuse 30 hat werkzeugseitig einen büchsenförmigen Gehäusedeckel 64, der ebenfalls eine Durchgangsaussparung 66 zur Durchführung des Werkzeugs 2 hat.

Des Weiteren sind in dem Rohr 38 gemäß Figur 2 radiale Durchgangsaussparungen 68 oder Fluidöffnungen eingebracht, die vom Betätigungselement 22 auf- und zusteuerbar sind.

Im Folgenden wird die Funktionsweise der Spannvorrichtung 1 anhand der Figuren 1 und 2 näher erläutert. Gemäß Figur 1 ist die Spannvorrichtung 1 im nicht betätigten Zustand dargestellt. Das Werkzeug 2 kann hierbei über die Durchgangsaussparung 66 des Gehäusedeckels 64, die Durchgangsaussparung 60 des Stützelements 58 und die Durchgangsaussparung 56 der Druckplatte 54 zwischen den Spannbacken 16 angeordnet werden, wobei das Werkzeug 2 an dem Rohr 38 anliegt. Zum Spannen wird der zweite Druckraum 36 mit Druckmittel (Luft) beschickt und es wird Druckmittel aus dem ersten Druckraum 32 entlassen. Hierdurch wird das Betätigungselement 22 aus der Position in Figur 1 in Richtung der Spannbacken 16 verschoben, wodurch diese an der Mantelfläche 26 des Betätigungselements 22 mit ihren Keilflächen 20 entlang gleiten und radial nach innen bewegt werden, womit auch die Manschette 18 gespannt wird. Des Weiteren werden die Spannbacken 16 mit einer Axialkraft über das Betätigungselement 22 beaufschlagt, wodurch die Druckplatte 54 zusammen mit den Spannbacken 16 axial in Richtung des Stützelements 58 bewegt wird, womit wiederum das Stützelement 58 derart verformt wird, dass ein Öffnungsquerschnitt der Durchgangsaussparung 60 verkleinert wird. Gemäß Figur 2 ist dann die Spannposition der Spannbacken gezeigt. Sie liegen dabei an dem Schaft 4 des Werkzeugs 2 an, wodurch dieses eingespannt ist. Des Weiteren liegt das Stützelement 58 dichtend mit seiner Dichtlippe 62 an dem Werkzeug 2 an. Gemäß Figur 2 sind die Durchgangsaussparungen 68 von dem Rohr 38 durch das Betätigungselement 22 im gespannten Zustand der Spannbacken 16 geschlossen. Somit kann Fluid über das Rohr 38 zu dem zumindest einen Kühlkanal 6 des Werkzeugs 2 geführt werden.

Durch die Beschickung des Werkzeugs 2 mit einem Fluid über die Spannvorrichtung 1 kann geprüft werden, ob der zumindest eine Kühlkanal 6 funktionsfähig ist und beispielsweise keine Einschlüsse oder ähnliches aufweist. Des Weiteren kann die Durchführung von Fluid durch das Werkzeug 2 über die Spannvorrichtung 1 dazu verwendet werden, dass keine Partikel oder Fremdkörper in den Kühlkanal 6 bei einer Präparation des Werkzeugs 2 eindringen. Das Fluid dient in diesem Fall als Sperrmittel. Des Weiteren kann mit dem Fluid der zumindest eine Kühlkanal 6 des Werkzeugs 2 gereinigt werden.

Die Prüfung des Werkzeugs 2 erfolgt beispielsweise durch Sichtkontrolle einer Person. Diese kann bei dem zu prüfenden Kühlkanal 6 feststellen, ob ein Volumenstrom des Fluids den Vorgaben entspricht. Ist der Volumenstrom zu gering oder tritt kein Fluid aus dem zu prüfenden Kühlkanal 6 aus, so kann Fehler, beispielsweise auf einen Einschluss oder einen verringerten Querschnitt des Kühlkanals 6, geschlossen werden. Die Prüfung kann anstelle einer Person, beispielsweise auch durch eine Sensorik erfolgen, die an ein Steuergerät zur Auswertung der ermittelten Daten angeschlossen sein kann.

Soll das Werkzeug 2 aus der Spannvorrichtung 1 entfernt werden, so wird Druckmittel aus dem zweiten Druckraum 36 entlassen und Druckmittel dem ersten Druckraum 32 zugeführt. Das Betätigungselement 22 wird dann aus der in Figur 2 gezeigten Spannposition weg von den Spannbacken 16 axial verschoben, womit sich diese aufgrund der vorgespannten Manschette 18 radial weg vom Schaft 4 bewegen. Des Weiteren wird die Druckplatte 54 axial in Richtung des Betätigungselements 22 durch ein Entspannen des Stützelements 58 bewegt. Des Weiteren wird die Dichtlippe 62 vom Werkzeug 2 durch das Entspannen des Stützelements 58 entfernt. Außerdem werden die Durchgangsaussparungen 68 des Rohrs 38 vom Betätigungselement 22 aufgesteuert, womit Druckmittel aus dem Rohr 38 in einen Innenraum des Gehäuses 30 entlassen werden kann, insbesondere um einen Druck abzubauen.

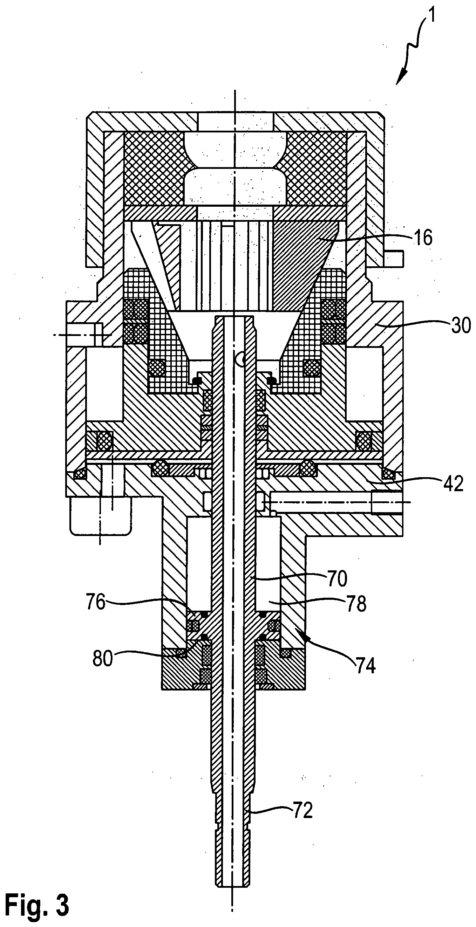

Gemäß Figur 3 hat die Spannvorrichtung 1 im Unterschied zu der Ausführungsform in Figur 1 und 2 ein axial verschiebbares Rohr 70. Dieses durchsetzt das Gehäuse 30 bodenseitig vollständig und kragt mit einem Anschlussabschnitt 72 aus diesem aus, an dem ein Fluidversorgung anschließbar ist. Zum axialen Verschieben des Rohrs 70 ist ein Zylinder 74 vorgesehen. Der Zylinder 74 ist im Gehäuseboden 42 des Gehäuses 30 ausgebildet. Ein Kolben 76 des Zylinders 74 ist durch einen Radialbund des Rohrs 70 gebildet. Der Kolben trennt hierbei im Gehäuseboden 42 einen ersten Ringraum 78 von einem zweiten Ringraum 80. Wird der Ringraum 80 mit Druckmittel beschickt und Druckmittel aus dem Ringraum 78 entlassen, so wird der Kolben 76 in Richtung hin zu den Spannbacken 16 bewegt, womit das Rohr 70 ebenfalls in diese Richtung axial verschoben wird. Hierdurch kann ein in der Spannvorrichtung 1 angeordnetes Werkzeug ausgeworfen werden. Zum Bewegen des Rohrs 70 in eine Richtung weg von den Spannbacken 16 wird Druckmittel in den Ringraum 78 beschickt und aus dem Ringraum 80 entlassen.

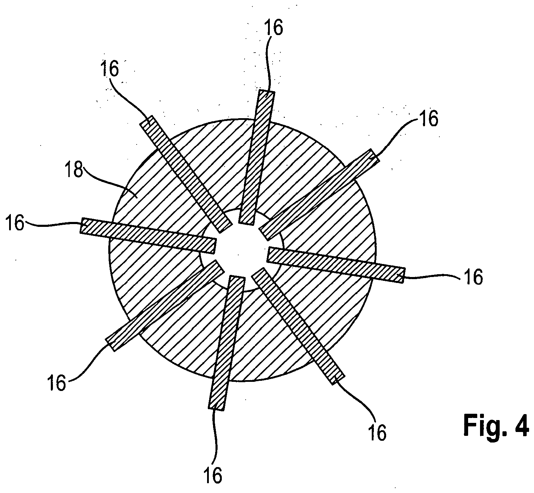

Gemäß Figur 4 ist die Einheit aus den Spannbacken 16 und der aus Gummi bestehenden Manschette 18 gezeigt. Zwischen den etwa plattenförmigen Spannbacken 16 erstreckt sich die Manschette 18 jeweils keilförmig nach innen, wobei sie sich somit in Radialrichtung nach innen gesehen verjüngt. Eine jeweilige Spannbacke 16 ist etwa plattenförmig ausgestaltet.

Offenbart ist eine Spannvorrichtung zum Einspannen eines zylindrischen Werkzeugs. In der Spannvorrichtung ist ein Fluidkanal vorgesehen, mit dem Fluid in zumindest einen Kühlkanal des Werkzeugs zuführbar ist. Des Weiteren ist ein Verfahren für die Spannvorrichtung offenbart, mit dem das Werkzeug geprüft und/oder gereinigt werden kann und/oder Fluid als Sperrmittel zuführbar ist. Des Weiteren ist eine Verwendung der Spannvorrichtung offenbart, die ein Prüfen des Werkzeugs und/oder Reinigen des Werkzeugs und/oder eine Beschickung des Werkzeugs mit Sperrmittel vorsieht.

### Bezugszeichenliste

- 1: Spannvorrichtung
- 2: Werkzeug
- 4: Schaft
- 6: Kühlkanal
- 8: Stirnfläche
- 10: Stirnfläche
- 12: Fluidkanal
- 14: Spannmittel
- 16: Spannbacken
- 18: Manschette
- 20: Keilfläche
- 22: Betätigungselement
- 24: Elementeinsatz
- 26: Mantelfläche
- 28: Radialbund
- 30: Gehäuse
- 32: erster Druckraum
- 34: Stirnfläche
- 36: zweiter Druckraum
- 38: Rohr
- 40: Flansch
- 42: Gehäuseboden
- 44: Fluidanschluss
- 46: Stirnfläche
- 48: Durchgangsaussparung
- 50: Anlagefläche
- 52: Stirnfläche
- 54: Druckplatte
- 56: Durchgangsaussparung
- 58: Stützelement
- 60: Durchgangsaussparung
- 62: Dichtlippe
- 64: Gehäusedeckel
- 66: Durchgangsaussparung
- 68: Durchgangsaussparung
- 70: Rohr
- 72: Anschlussabschnitt
- 74: Zylinder
- 76: Kolben
- 78: erster Ringraum
- 80: zweiter Ringraum

## Patentansprüche

1. Spannvorrichtung zum Einspannen eines einen Schaft (4) aufweisenden Werkzeugs (2), um dieses zu präparieren und/oder zu prüfen und/oder zu reinigen, die ein Gehäuse (30) mit einer Werkzeugaufnahme (66, 60, 56, 50) aufweist, wobei in dem Gehäuse (30) ein Spannmittel (16, 22) zum Einspannen eines in der Werkzeugaufnahme (66, 60, 56, 50) angeordneten Werkzeugs (2) und ein Fluidkanal (12) zur Zuführung eines Fluids zum Werkzeug (2) vorgesehen sind, der durch ein sich im Gehäuse erstreckendes Rohr (38, 70) gebildet ist, das Spannmittel eine Mehrzahl von Spannbacken (16) zum Einspannen des Werkzeugs (2) aufweist, die über eine Struktur (18) gehalten sind, die Spannbacken (16) auf ihrer Außenseite jeweils eine Keilfläche (20) aufweisen, über die sie von einem Betätigungselement (22) betätigbar sind, **dadurch gekennzeichnet, dass**
das Rohr (38, 70) eine ringförmige Anlagefläche (46) für das Werkzeug (2) aufweist, und
das Rohr (38, 70) axial verschiebbar oder über einen Flansch (40) mit einem Gehäuseboden (42) des Gehäuses (30) durch eine Schraubverbindung fest verbunden ist, wobei
die Spannbacken (16) mit ihrer von dem Betätigungselement (22) wegweisenden Stirnfläche (52) an einer Druckplatte (54) etwa axial abstützbar sind, wobei die Druckplatte (54) axial verschiebbar ist und sich auf ihrer von den Spannbacken (16) wegweisenden Plattenseite an einem elastischen Stützelement (58) abstützt.

2. Spannvorrichtung nach Anspruch 1, wobei das Betätigungselement (22) eine schalenförmige oder kegelförmige oder kegelstumpfförmige Mantelfläche (26) zum Betätigen der Spannbacken (16) aufweist.

3. Spannvorrichtung nach Anspruch 1 oder 2, wobei das Betätigungselement (22) als fluidisch betätigbarer Kolben ausgebildet ist, der in dem Gehäuse verschiebbar angeordnet ist.

4. Spannvorrichtung nach einem der Ansprüche 1 bis 3, wobei das Stützelement (58) eine Durchgangsaussparung (60) zur Durchführung des Werkzeugs (2) aufweist, wobei sich ein Öffnungsquerschnitt der Durchgangsaussparung (60) bei einer Verschiebung des Betätigungselements (22) in Richtung von Spannpositionen verkleinert und in entgegengesetzter Richtung vergrößert.

5. Spannvorrichtung nach einem der Ansprüche 1 bis 4, wobei die Mantelfläche (26) des Betätigungselements (22) an einem Elementeinsatz (24) ausgebildet ist, der zumindest teilweise aus Keramik besteht.

6. Spannvorrichtung nach einem der Ansprüche 1 bis 5, wobei in dem Rohr (38) zumindest eine Fluidöffnung (68) eingebracht ist, um den Fluidkanal (12) mit einem Innenraum des Gehäuses (30) zu verbinden, wobei die Fluidöffnung (68) in der Spannposition des Betätigungselements (22) geschlossen ist und in der Entspannposition des Betätigungselements (22) geöffnet ist.

7. Verfahren zur Präparation und/oder Reinigung und/oder Prüfung eines Werkzeugs mit einer Spannvorrichtung gemäß einem der vorhergehenden Ansprüche mit den Schritten:
- Einsetzen eines Werkzeugs (2) in die Spannvorrichtung und Anlage des Werkzeugs (2) an der ringförmigen Anlagefläche (46) des Rohrs (38, 70),
- Einspannen des Werkzeugs (2),
- Prüfen des Werkzeugs (2) durch Zuführung von Fluid aus dem Fluidkanal (12) in zumindest einen Kühlkanal (6) des Werkzeugs (2), und/oder Reinigen des Werkzeugs (2) durch Zuführung von Fluid aus dem Fluidkanal (12) in den zumindest einen Kühlkanal (6) des Werkzeugs (2), und/oder Zuführung von Fluid aus dem Fluidkanal (12) in den zumindest einen Kühlkanal (6) des Werkzeugs (2) als Sperrmittel.

## Claims

1. Clamping device for clamping a tool (2) having a shaft (4), in order to prepare and/or check and/or clean same, which has a housing (30) comprising a tool holder (66, 60, 56, 50), wherein a clamping means (16, 22) for clamping a tool (2) arranged in the tool holder (66, 60, 56, 50) and a fluid channel (12) for feeding a fluid to the tool (2) are provided in the housing, which channel is formed by a tube (38, 70) extending in the housing, the clamping means have a plurality of clamping jaws (16) for clamping the tool (2), which are held above a structure (18), the clamping jaws (16) each have a wedge surface (20) on their outer side, via which they can be actuated by an actuating element (22), **characterised in that**
the tube (38, 70) has an annular contact surface (46) for the tool (2), and
the tube (38, 70) is axially displaceable or is securely connected, via a flange (40), to a housing floor (42) of the housing (30) by a screw connection, wherein
the clamping jaws (16) can be supported approximately axially on a pressure plate (54) with their end face (52) facing away from the actuating element (22), wherein the pressure plate (54) is axially displaceable and is supported on a resilient support element (58) on its plate side facing away from the clamping jaws (16).

2. Clamping device according to claim 1, wherein the actuating element (22) has a shell-shaped or conical or frustoconical outer surface (26) for actuating the clamping jaws (16).

3. Clamping device according to claim 1 or 2, wherein the actuating element (22) is designed as a fluidically actuatable piston which is displaceably arranged in the housing.

4. Clamping device according to any of claims 1 to 3, wherein the support element (58) has a through recess (60) for the feedthrough of the tool (2), wherein an opening cross-section of the through recess (60) decreases when the actuating element (22) is displaced towards clamping positions and increases in the opposite direction.

5. Clamping device according to any of claims 1 to 4, wherein the outer surface (26) of the actuating element (22) is formed on an elementary insert (24) that is made, at least partially, of ceramic.

6. Clamping device according to any of claims 1 to 5, wherein at least one fluid opening (68) is introduced in the tube (38) in order to connect the fluid channel (12) to an interior space of the housing (30), wherein the fluid opening (68) is closed in the clamping position of the actuating element (22) and is open in the release position of the actuating element (22).

7. Method for preparing and/or cleaning and/or checking a tool comprising a clamping device according to one of the preceding claims, comprising the steps:
- inserting a tool (2) into the clamping device and contacting the tool (2) on the annular contact surface (46) of the tube (38, 70),
- clamping the tool (2),
- checking the tool (2) by feeding fluid from the fluid channel (12) into at least one cooling channel (6) of the tool (2), and/or cleaning the tool (2) by feeding fluid from the fluid channel (12) into the at least one cooling channel (6) of the tool (2), and/or feeding fluid from the fluid channel (12) into the at least one cooling channel (6) of the tool (2) as blocking means.

## Revendications

1. Dispositif de serrage pour le serrage d'un outil (2) présentant une tige (4) afin de le préparer et/ou le vérifier et/ou le nettoyer, qui présente un boîtier (30) avec un logement d'outil (66, 60, 56, 50), dans lequel dans le boîtier (30) un moyen de serrage (16, 22) est prévu pour le serrage d'un outil (2) agencé dans le logement d'outil (66, 60, 56, 50) et un canal fluidique (12) est prévu pour l'amenée d'un fluide vers l'outil (2) qui est formé par un tube (38, 70) s'étendant dans le boîtier, le moyen de serrage présente une pluralité de mâchoires de serrage (16) pour le serrage de l'outil (2) qui sont maintenues par le biais d'une structure (18), les mâchoires de serrage (16) présentent sur leur côté extérieur respectivement une surface cunéiforme (20), par le biais de laquelle elles peuvent être actionnées par un élément d'actionnement (22), **caractérisé en ce que**
le tube (38, 70) présente une surface d'appui (46) annulaire pour l'outil (2), et
le tube (38, 70) est relié de manière mobile axialement ou fixement par le biais d'une bride (40) à un fond (42) du boîtier (30) par une liaison vissée, dans lequel
les mâchoires de serrage (16) peuvent être en appui à peu près axialement avec leur surface frontale (52) tournée loin de l'élément d'actionnement (22) contre une plaque de pression (54), dans lequel la plaque de pression (54) est mobile axialement et s'appuie sur son côté de plaque tournée loin des mâchoires de serrage (16) contre un élément d'appui (58) élastique.

2. Dispositif de serrage selon la revendication 1, dans lequel l'élément d'actionnement (22) présente une surface enveloppe (26) en forme de coque ou de cône ou de cône tronqué pour l'actionnement des mâchoires de serrage (16).

3. Dispositif de serrage selon la revendication 1 ou 2, dans lequel l'élément d'actionnement (22) est réalisé comme piston actionnable fluidiquement qui est agencé de manière mobile dans le boîtier.

4. Dispositif de serrage selon l'une des revendications 1 à 3, dans lequel l'élément d'appui (58) présente un évidement de passage (60) pour le passage de l'outil (2),
dans lequel une section transversale d'ouverture de l'évidement de passage (60) se rétrécit lors d'un mouvement de l'élément d'actionnement (22) en direction de positions de serrage et augmente dans le sens opposé.

5. Dispositif de serrage selon l'une des revendications 1 à 4, dans lequel la surface enveloppe (26) de l'élément d'actionnement (22) est réalisée au niveau d'un insert d'élément (24) qui se compose au moins partiellement de céramique.

6. Dispositif de serrage selon l'une des revendications 1 à 5, dans lequel au moins une ouverture fluidique (68) est ménagée dans le tube (38) afin de relier le canal fluidique (12) à un espace intérieur du boîtier (30), dans lequel l'ouverture fluidique (68) est fermée dans la position de serrage de l'élément d'actionnement (22) et est ouverte dans la position de détente de l'élément d'actionnement (22).

7. Procédé de préparation et/ou de nettoyage et/ou de vérification d'un outil avec un dispositif de serrage selon l'une des revendications précédentes avec les étapes :
- l'insertion d'un outil (2) dans le dispositif de serrage et l'appui de l'outil (2) contre la surface d'appui (46) annulaire du tube (38, 70),
- le serrage de l'outil (2),
- la vérification de l'outil (2) par l'amenée de fluide du canal fluidique (12) dans au moins un canal de refroidissement (6) de l'outil (2), et/ou le nettoyage de l'outil (2) par l'amenée de fluide du canal fluidique (12) dans l'au moins un canal de refroidissement (6) de l'outil (2), et/ou l'amenée de fluide du canal de refroidissement (12) dans l'au moins un canal de refroidissement (6) de l'outil (2) comme moyen de verrouillage.
